Europäisches Patentamt

(19) European Patent Office

Office européen des brevets

(11) Publication number: **0 186 856**
**B1**

(12) **EUROPEAN PATENT SPECIFICATION**

(45) Date of publication of patent specification: **14.06.89**

(21) Application number: **85116136.4**

(22) Date of filing: **18.12.85**

(51) Int. Cl.⁴: **F 16 C 11/06**

(54) Joint having ball and shaft coupled through plastic deformation.

(30) Priority: **25.12.84 JP 278782/84**
**25.12.84 JP 278783/84**

(43) Date of publication of application:
**09.07.86 Bulletin 86/28**

(45) Publication of the grant of the patent:
**14.06.89 Bulletin 89/24**

(84) Designated Contracting States:
**CH DE FR GB IT LI NL SE**

(56) References cited:
**FR-A-1 501 223**
**FR-A-2 289 162**
**GB-A-2 045 121**
**JP-A-55 096 377**
**US-A-3 468 007**

**PATENTS ABSTRACTS OF JAPAN, vol. 9, no.**
**213 (M-408) 1936r, 30th August 1985; & JP - A -**
**60 72 634 (HITACHI SEISAKUSHO K.K.) 24-04-**
**1985**

(73) Proprietor: **HITACHI, LTD.**
**6, Kanda Surugadai 4-chome Chiyoda-ku**
**Tokyo (JP)**

(72) Inventor: **Kanamaru, Hisanobu**
**3449-7, Higashiishikawa**
**Katsuta-shi (JP)**
Inventor: **Onuma, Tomiyasu**
**1395-1, Takaba**
**Katsuta-shi (JP)**
Inventor: **Sasaya, Kazushi**
**Boda Apartment House 542, 2592-1**
**Takaba, Katsuta-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

### FIELD OF THE INVENTION AND RELATED ART STATEMENT

The present invention relates to a joint having a ball and a shaft which are coupled to each other through plastic deformation and more particularly to a joint having a ball and a shaft suitable for a ball joint used in an internal combustion engine or a piston mechanism.

A piston mechanism has been widely used in, for example, an automotive compressor as shown in Japanese Unexamined Patent Publication No. 96377/80. As shown in Fig. 1 of that patent publication, the structure is comprised of a piston portion reciprocating within a cylinder and a piston rod for mechanically connecting the piston portion and a swash drive plate to each other.

In such a structure, almost all of piston rods are of the spherical head couple type and are made of steel since the piston rods are used mainly for reciprocating motion. Such spherical head couple type piston rods have been usually cast into one-piece elements or otherwise the ball portions and the shaft portion have been made separately and bonded to each other through a weld technique. There have been proposed no processes except for such casting and postbonding processes. However, the piston rods made by casting must be ground in a post process, which would reduce their production efficiency and would not be economical. Also, in bonding the balls and the shaft it is very difficult to obtain a satisfactory mechanical accuracy, which would lead to an increase in cost.

In a method of separately forming the ball portions and the shaft portion and bonding them by welding, although it is easy to form the respective parts, it is very difficult to obtain a satisfactory mechanical accuracy as in the former case. This is not suitable for mass-production. Moreover, even if the shaft is made of light metal such as aluminum for reducing its weight, the recent weld technique cannot offer a reliable bond between the aluminum material and iron material. This cannot withstand a practical use.

FR-A-1 501 223 discloses a joint having a metal ball and a shaft which are coupled by plastic deformation of parts thereof, wherein the shaft is inserted into a blank hole of said ball prior to said plastic deformation which blank hole is divergent to its bottom, a hollow end part of the shaft being plastically deformed between said divergent part of said hole and an additional member placed in the bottom of said hole and entering the hollow end part of said shaft. Such a joint needs to process the bottom of the ball hole to be divergent and to process said hole, shaft and additional member very accurately, resulting in disadvantages in mass-production and cost. Further, the plastic deformation of the shaft leads to a high distortion thereof, making difficult to achieve a highly accurate joint.

On the other hand, FR-A-2 289 162 discloses a prosthesis comprising a joint having an alumina ceramic ball and a metal shaft, said ceramic ball having a conical mounting hole with a corrugated surface therein, said shaft being of conical shape of the same conicity ratio and fitted into said mounting hole by deforming the shaft by means of said corrugated ball hole surface under pressure or heating action creating friction between the hole wall and the shaft.

### SUMMARY OF THE INVENTION

In order to overcome the above-noted defects, an object of the present invention is to provide a joint having a ball and a shaft, which is superior in mass-production with a high mechanical accuracy.

To achieve said object, the present invention provides, in a first aspect, a joint having a ball and a shaft, comprising: a metal ball; a concentric cylindrical mounting blank hole bored toward a center of said ball; and a metal shaft adapted to be fitted into an opening end of said cylindrical mounting blank hole; said ball and said shaft being coupled to each other by a plastic deformation, characterized in that said cylindrical mounting blank hole bored on said ball is extending straight into said ball, an annular corrugated face is formed at an inner circumferential portion at a side of opening of said mounting blank hole or at an outer circumferential portion of said shaft to be fixed opposing to said inner circumferential portion, circumferential material of said ball or said shaft opposing to said corrugated face is locally plastically deformed, thus bonding said ball and said shaft to each other with a tightening force caused by said plastic deformation.

The present invention also provides, in a second aspect, a joint according to claim 5.

With such a structure that one of the shaft and the ball fittingly bonded to each other is plastically locally deformed, it is possible to manufacture the joint with a simple pressing work. Therefore, it is possible to provide the joint, having the ball and shaft, that has a high accuracy and is superior in mass-production.

### BRIEF DESCRIPTION OF THE DRAWINGS

Fig. 1 is an exploded perspective view showing a joint of balls and a shaft in accordance with an embodiment of the invention;

Fig. 2 is a longitudinal sectional view showing a bonding process of the parts shown in Fig. 1;

Fig. 3 is a perspective view of press dies shown in Fig. 2;

Fig. 4 is a fragmentary, in part, cross-sectional elevational view showing a bonded state of a ball and a shaft in accordance with another embodiment of the invention;

Fig. 5 is a fragmentary, in part, cross-sectional view showing the case where the present invention is applied to a bond between a piston and a piston rod for an automotive air-conditioner compressor; and

Fig. 6 is an exploded perspective view of the bond shown in Fig. 5.

## DESCRIPTION OF THE PREFERRED EMBODIMENTS

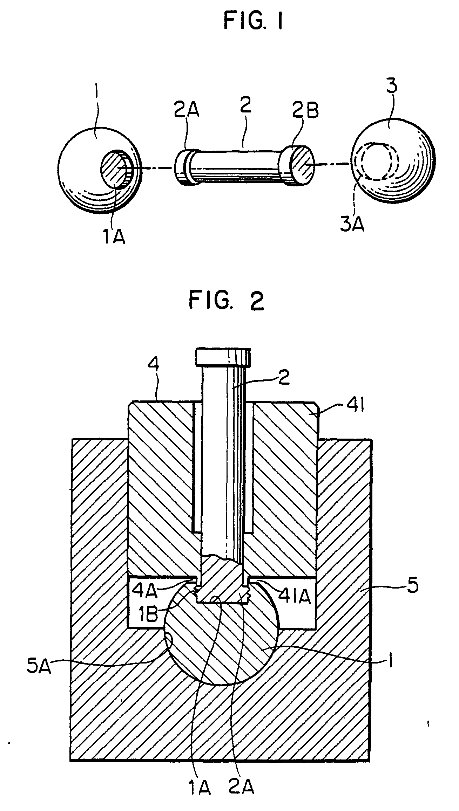

An embodiment of the invention will now be described with reference to Figs. 1 and 2.

Fig. 1 shows a bonded structure between balls and a shaft in case where the structure is applied to a piston mechanism of an automotive compressor and a method therefor. In Figs. 1 and 2, a ball 1 is made of steel, a mounting hole 1A having a depth of several mm from its outer periphery toward its center is formed in the ball 1 and a diameter of the hole 1A is selected to be substantially equal to an outer diameter of an end 2A of a shaft 2 so that the shaft end 2A may be fitted into the hole 1A. Because the structure of the bond is of the head couple type, the shaft 2 has a like ball 3 at the opposite end thereof so that the opposite end 2B of the shaft 2 may be fitted into a mounting hole 3A in the same manner.

The mounting holes 1A and 3A to be formed in the balls 1 and 3 are worked by mechanical cutting with a lathe or the like. In an inner surface of the hole, at its intermediate portion, there is formed an annular groove 1B having a W-shape in cross-section. Then, the end 2A of the shaft 2 is fitted into the mounting hole 1A so that its outer circumferential portion is plastically locally deformed with the annular groove 1B, thus firmly bonding the ball and the shaft with a tightening force being generated around the annular groove 1B.

A bonding method for the ball and the shaft according to the present invention will be described in conjunction with Fig. 2.

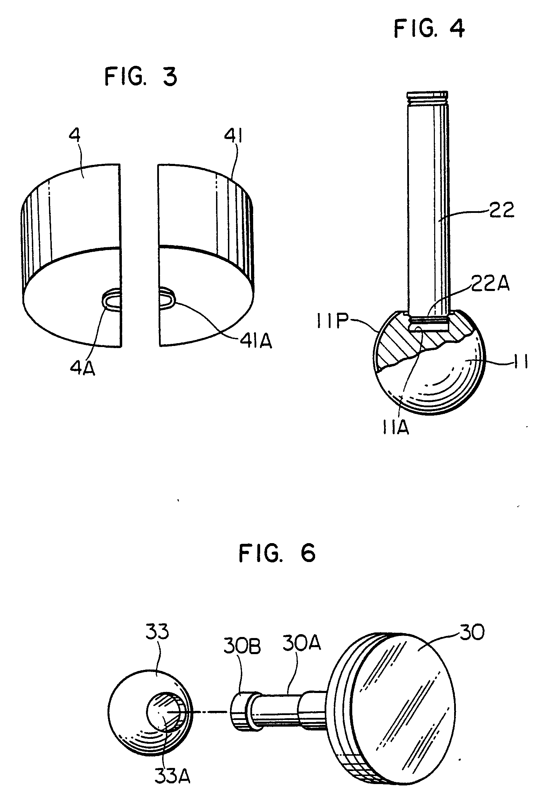

After the shaft 2 has been held so as to be clamped by a pair of hollow dies 4 and 41 as shown in Fig. 3, the mounting hole 1A of the ball 1 is fitted to the end 2A of the shaft 2. Then, these assembling components are inserted in unison into a receiving die 5 having a cylindrical shape. On the other hand, in the central portion of a bottom of the receiving die 5, there is formed a hole 5A having a spherical shape which is the same as the sphere of the ball 1. The ball 1 is received by the hole 5A.

Male teeth 4A and 41A are formed at a circumferential portion of lower end faces of the dies 4 and 41 along inner peripheral portions thereof and are arranged to occupy a gap between an inner peripheral portion of the mounting hole 1A of the ball 1 and the outer peripheral portion of the shaft 2. Namely, as is apparent from Fig. 1, an outer diameter of the shaft 2 except for the ends 2A and 2B is smaller than a diameter of the mounting holes 1A and 3A, and in the state where the end 2A of the shaft 2 is fitted into the mounting hole 1A, confronting surface for the male teeth 4A and 41A are defined on the upper vertical surface of the end 2A of the shaft 2. The bond between the ball 1 and the shaft 2 is made by simultaneously lowering the dies 4 and 41 with a peripheral end face of the end 2A of the shaft 2 being pressed vertically by the male teeth 4A and 41A. Then, the locally compressed material will be locally fluidized normal to the compression direction, that is, in a direction toward the annular W-shaped groove 1B and will be firmly bonded with a tightening force at the projected portions formed by the annular W-shaped groove 1B.

After the bonding has been completed, the bonded shaft 2 is removed together with the press dies 4 and 41 and the press dies 4 and 41 are opened. Then, the other ball 3 is bonded to the shaft 2 in the same working order.

The thus obtained piston structure is available in case where different material metals should be bonded to each other. It is possible to bond a ball and a shaft which are made of any desired metal, which is suitable for reduction in weight.

Also, the mounting hole 1A formed in the ball 1 is directed to the center axis, the shaft 2 is fitted thereat and the end of the shaft is coaxially pressed and bonded by the press dies 4 and 41, so that a manufacturing accuracy and a mass-production are ensured. With respect to the bonding method, the member made of softer material is to be deformed in a plastic manner through cold press, and the method does not depend on the material. The method may be carried out very effectively. Although, in the embodiment shown, the annular W-shaped groove 1B is formed in an inner surface of the mounting hole 1A of the ball 1, instead thereof, an electric discharge work may be applied to the surface to roughen it. Also, in the case where the mounting hole is formed by cutting work, the roughness caused by cutting work may be often satisfactory. However, as a higher mechanical strength is desired, it is preferable to form the groove while cutting the hole.

Furthermore, although the bond described hitherto is one between the steel and aluminum being applied to the spherical head couple structure, only one of the heads may be spherical and the bond between the steel member and the steel member may be carried out. However, it is preferable that, in the steel-to-steel bond, the mounting hole be subjected to a carburizing process to be hardened. This process is simple and effective.

Fig. 4 shows a bond structure in which the material constituting the ball 11 is plastically deformed for bond with the shaft 22. In this case, it is possible to bond soft steels to each other, which is much superior in production efficiency to the cutting work.

The ball 11 is made of soft steel and is subjected at its outer periphery to the carburizing process to form a hard surface 11p of about 0.3 mm. A mounting hole 11A as in the previous embodiment is formed in the central portion of the ball 11 and fits the end of the shaft 22. With an annular W-shaped groove 22A formed in advance in the end of the shaft 22, a material constituting the ball 11 is locally plastically deformed as in the previous embodiment. Accordingly, it is unnecessary to make the ball 11 from an expensive hard material and to work the end for bonding the ball and shaft.

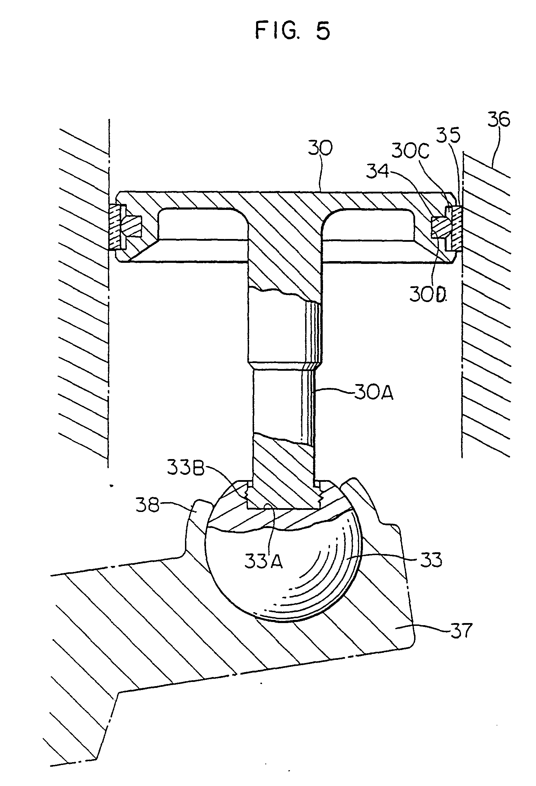

Still another embodiment will be described with reference to Figs. 5 and 6, which show an example of a piston structure mounted on an automotive compressor. A piston portion having a disc-shape is made of light metal such as pure aluminum or aluminum alloy. The central portion of the piston structure is formed integral by cold working or the like. The piston structure has a piston rod 30A suspending therefrom in the form of a T-shape in cross-section.

The ball 33 is usually made of steel and is provided through a cutting work or the like with a mounting hole 33A that has a depth of several mm directed to the center thereof and is substantially equal to an outer diameter of the end 30B of the piston rod 30A. In the inner circumferential surface, there is formed an annular W-shaped groove 33B. The end of the piston rod 30A is fitted into the mounting hole 33A. The outer circumferential portion of the end of the rod 30A is plastically locally deformed with the annular groove 33B to thereby firmly bond the two components with a tightening force exerted to the circumferential surface of the annular groove 33B.

An annular groove 30D to receive a resilient ring 34 and another annular groove 30C to receive a seal 35 are formed stepwise in an outer circumferential surface of the piston portion 30. The resilient ring 34 causes the seal 35 to be normally in sliding contact with an inner circumferential surface of a cylinder 36. On the other hand, the spherical ball 33 is rotatably arranged in an outer portion of a swash plate 37 but is prevented from pulling apart by a pull-apart preventing member 38 formed on the swash plate 37.

In the thus constructed piston mechanism, all components except for the ball may be made of light material having a small specific weight. The total weight may be reduced to about one third of that of the conventional piston mechanism in which the piston rod is made of steel.

This reduction in weight leads to making the piston rod from light metal and dispenses with the necessity to bond the piston portion 30 and the piston rod 30A to each other. Also, it is unnecessary to elongate the piston than required for obtaining a satisfactory bonding strength.

Actual mounting state of the piston mechanism will be explained with reference to Fig. 5. The piston mechanism is reciprocated in the axial direction within the cylinder and is rotated in synchronism with the cylinder 36 and the swash plate 37. However, since the piston portion 30 is made of very light metal, a mechanical inertia of the piston portion due to the centrifugal force may be made very small and a load imposed on the seal 35 may be moderated, thus considerably prolonging a service life of the seal 35.

As described above, the cylinder rotary type compressor is largely influenced by the weight of the piston. Therefore, such a compressor has not been widely used although it has various advantages. According to the invention, a problem of weight may be solved.

In the embodiment shown, the annular W-shaped groove 33B is formed in the inner circumferential surface of the mounting hole 33A of the ball 33. However, instead thereof, an electric discharge work may be applied to roughen the surface and in the case where the mounting hole is made by cutting work, the cutting roughness may suffice in some cases. However, if a higher strength is required, it is desirable to form the groove while cutting the surface.

## Claims

1. A joint having a ball and a shaft, comprising: a metal ball (1; 11); a concentric cylindrical mounting blank hole (1A; 11A) bored toward a center of said ball; and a metal shaft (2; 22) adapted to be fitted into an opening end of said cylindrical mounting blank hole (1A; 11A); said ball (1; 11) and said shaft (2; 22) being coupled to each other by a plastic deformation, characterized in that said cylindrical mounting blank hole (1A; 11A) bored on said ball (1; 11) is extending straight into said ball (1; 11), an annular corrugated face (1B; 22A) is formed at an inner circumferential portion at a side of opening of said mounting blank hole (1A; 11A) or at an outer circumferential portion of said shaft (2; 22) to be fixed opposing to said inner circumferential portion, circumferential material of said ball (1; 11) or said shaft (2; 22) opposing to said corrugated face (1B; 22A) is locally plastically deformed, thus bonding said ball (1; 11) and said shaft (2; 22) to each other with a tightening force caused by said plastic deformation.

2. A joint according to claim 1, characterized in that said corrugated face (1B) has annular recesses and is formed at an inner circumferential face of said mounting blank hole (1A) bored on said ball (1).

3. A joint according to claim 1 or 2, characterized in that at least said shaft (2) is made of metal material softer than that of said ball (1).

4. A joint according to claim 1, characterized in that said ball (11)) is made of metal material softer than or equal to that of said shaft (22) and is provided with a hardened layer being harder than said shaft (22) at the outer circumferential portion of said ball (11).

5. A joint having a harder metal ball and a metal piston rod, comprising: said harder ball (33) having a concentric cylindrical mounting blank hole (33A) bored toward a center of said harder ball; the diameter of said mounting hole (33A) being selected substantially equal to the outer diameter of one end of said piston rod (30A); and said piston rod (30A) fitted into an opening end of said mounting hole (33A), said piston rod (30A) having at its other end a piston portion (30) and being coupled to said harder ball (33) by plastic deformation, whereby said cylindrical mounting blank hole (33A) bored on said ball (33) is extending straight into said ball (33), an annular corrugated face (33B) is formed at an inner circumferential portion at a side of opening of said mounting blank hole (33A), and circumferential material of said piston rod (30A) opposing to said corrugated face (33B) is locally plastically deformed, thus bonding said ball (33) and said piston rod (30) to each other with a tightening force caused by said plastic deformation.

6. A joint according to claim 5, characterized in that said piston rod (30A) and said piston portion (30) are formed integrally of aluminum material, and the one end of said piston rod (30A) is plastically deformed in said mounting hole (33A). ·

## Patentansprüche

1. Verbindung zwischen einer Kugel und einer Welle mit:

einer Metallkugel (1; 11), einer konzentrischen zylindrischen, in Richtung des Mittelpunktes der Kugel gebohrten Montage-Blindbohrung (1A; 11A) und einer Metallwelle (2; 22), die in dem Öffnungsende der zylindrischen Montage-Blindbohrung (1A; 11A) angebracht ist, wobei die Kugel (1; 11) und die Welle (2; 22) durch eine plastische Verformung miteinander verbunden sind,

dadurch gekennzeichnet,

daß sich die in die Kugel (1; 11) gebohrte Montage-Blindbohrung (1A; 11A) geradlinig in die Kugel (1; 11) erstreckt und an einem inneren Umfangsbereich an der Öffnungsseite der Montage-Blindbohrung (1A; 11A) oder an einem äußeren Umfangsbereich der Welle (2; 22) eine ringförmig gewellte Fläche (1B; 22A) ausgebildet ist, wobei die Welle dem inneren Umfangsbereich gegenüberliegend angeordnet ist und das Umfangsmaterial der Kugel (1; 11) oder der Welle (2; 22), das der gewellten Oberfläche (1B; 22A) gegenüberliegt, lokal plastisch verformt wird, wodurch die Kugel (1; 11) und die Welle (2; 22) durch eine Haltekraft miteinander verbunden werden, die durch die plastische Verformung verursacht wird.

2. Verbindung nach Anspruch 1, dadurch gekennzeichnet, daß die gewellte Fläche (1B) ringförmige Vertiefungen aufweist und an einer inneren Umfangsfläche der in die Kugel (1) gebohrten Montage-Blindbohrung (1A) ausgebildet ist.

3. Verbindung nach Anspruch 1 oder 2, dadurch gekennzeichnet, daß wenigstens die Welle (2) aus einem metallischen Material hergestellt ist, welches weicher ist als das Material der Kugel (1).

4. Verbindung nach Anspruch 1, dadurch gekennzeichnet, daß die Kugel (11) aus einem metallischen Material hergestellt ist, welches weicher oder gleich hart ist wie die Welle (22), und daß die Kugel (11) im Bereich ihres Außenumfangs mit einer gehärteten Schicht versehen ist, die härter ist als die Welle (22).

5. Verbindung zwischen einer harten Metallkugel und einer metallischen Kolbenstange mit:

der harten Kugel (33), deren konzentrische zylindrische Montage-Blindbohrung (33A) in Richtung des Mittelpunktes der Kugel gebohrt ist, wobei der Durchmesser der Montage-Blindbohrung (33A) im wesentlichen übereinstimmt mit dem Außendurchmesser eines Endes der Kolbenstange (30A) und einer in der Öffnung der Montage-Blindbohrung (33A) angebrachten Kolbenstange (30A), deren anderes Ende ein Kolbenteil (30) aufweist und mit der harten Kugel (33) durch plastische Verformung verbunden ist,

dadurch gekennzeichnet,

daß sich die in die Kugel (33) gebohrte Montage-Blindbohrung (33A) geradlinig in die Kugel (33) erstreckt, eine ringförmig gewellte Fläche (33B) an einem inneren Umfangsbereich an der Öffnungsseite der Montage-Blindbohrung (33A) ausgebildet ist und das Umfangsmaterial der Kolbenstange (30A), das der gewellten Fläche (33B) gegenüberliegt, lokal plastisch verformt wird, wodurch die Kugel (33) und die Kolbenstange (30) durch eine Haltekraft miteinander verbunden werden, die durch die plastische Verformung verursacht wird.

6. Verbindung nach Anspruch 5, dadurch gekennzeichnet, daß die Kolbenstange (30A) und das Kolbenteil (30) vollständig aus Aluminiummaterial geformt sind und das eine Ende der Kolbenstange (30A) in der Montage-Blindbohrung (33A) plastisch verformt ist.

## Revendications

1. Articulation comportant une rotule et une tige, comprenant:

une rotule métallique (1; 11); un trou borgne cylindrique concentrique de montage (1A; 11A) percé en direction du centre de ladite rotule; et une tige métallique (2; 22) adaptée pour être insérée dans une extrémité d'ouverture dudit trou borgne cylindrique de montage (1A; 11A); ladite rotule (1; 11) et ladite tige (2; 22) étant accouplées l'une à l'autre au moyen d'une déformation plastique,

caractérisée en ce que

ledit trou borgne cylindrique de montage (1A; 11A) percé dans ladite rotule (1; 11) s'étend avec une forme rectiligne à l'intérieur de ladite rotule (1; 11), une face annulaire nervurée (1B; 22A) est ménagée sur la partie circonférentielle intérieure au niveau d'un côté de l'ouverture dudit trou borgne de montage (1A; 11A) ou sur une partie circonférentielle extérieure de ladite tige (2; 22) devant être fixée à l'opposé de ladite partie intérieure circonférentielle; le matériau circonférentiel de ladite rotule (1; 11) ou de ladite tige (2; 22), situé à l'opposé de ladite face nervurée (1B; 22A), est déformé plastiquement, localement, ce qui réunit ladite rotule (1; 11) et ladite tige (2; 22) l'une à l'autre avec une force de serrage provoquée par ladite déformation plastique.

2. Articulation selon la revendication 1, caractérisée en ce que ladite face nervurée (1B) comporte des renfoncements annulaires et est formée au niveau d'une surface intérieure circonférentielle dudit trou borgne de montage (1A) percé dans ladite rotule (1).

3. Articulation selon la revendication 1 ou 2, caractérisée en ce qu'au moins ladite tige (2) est réalisée en un matériau métallique plus mou que celui de ladite rotule (1).

4. Articulation selon la revendication 1, caractérisé en ce que ladite rotule (11) est réalisée en un matériau métallique plus mou ou aussi mou que celui de ladite tige (22) et comporte une couche trempée, plus dure que ladite tige (22), au niveau de la partie circonférentielle extérieure de ladite rotule (11).

5. Articulation comportant une rotule métallique plus dure et une tige de piston métallique, comprenant:

ladite rotule plus dure (33) comportant un trou borgne cylindrique concentrique de montage (33A) percé en direction du centre de ladite rotule plus dure;

le diamètre dudit trou de montage (33A) étant choisi sensiblement égal au diamètre extérieur d'une première extrémité de ladite tige de piston (30A); et

ladite tige de piston (30A) insérée dans une extrémité d'ouverture dudit trou de montage (33A), ladite tige de piston (30A) portant, sur son autre extrémité, un élément formant piston (30) et étant accouplée à ladite rotule plus dure (33) sous l'effet d'une déformation plastique,

caractérisée en ce que

ledit trou borgne cylindrique de montage (33A) percé dans ladite rotule (33) s'étend avec une forme rectiligne dans ladite rotule (33), une face annulaire nervurée (33B) est ménagée sur une partie circonférentielle intérieure d'un côté de l'ouverture dudit trou borgne de montage (33A), et le matériau circonférentiel de ladite tige de piston (30A), situé à l'opposé de ladite face nervurée (33B) est déformé localement, plastiquement, ce qui réunit ladite rotule (33) et ladite tige de piston (30) l'une à l'autre avec une force de serrage produite par ladite déformation plastique.

6. Articulation selon la revendication 5, caractérisée en ce que la tige de piston (30A) et ledit élément formant piston (30) sont formés d'un seul tenant en un matériau à base d'aluminium, et que ladite première extrémité de ladite tige de piston (30A) est déformée plastiquement dans ledit trou de montage (33A).

## FIG. 1

## FIG. 2

FIG. 4

FIG. 3

4    41

41A

4A

22

22A

IIP

II

IIA

FIG. 6

33    30B    30A    30

33A

# FIG. 5

3